(19)

Europäisches
Patentamt
European
Patent Office
Office européen
des brevets

(11) **EP 4 667 083 A1**

(12) **EUROPEAN PATENT APPLICATION**

(43) Date of publication:
**24.12.2025 Bulletin 2025/52**

(51) International Patent Classification (IPC):
**B01D 53/14** (2006.01)    **B01D 3/00** (2006.01)
**B01D 53/18** (2006.01)

(21) Application number: **24183662.6**

(22) Date of filing: **21.06.2024**

(52) Cooperative Patent Classification (CPC):
**B01D 53/1425; B01D 3/08; B01D 19/0005;**
**B01D 53/1475; B01D 53/18;** B01D 2252/103;
B01D 2252/1035; B01D 2252/2021;
B01D 2252/2023; B01D 2252/204; B01D 2256/245;
B01D 2257/302; B01D 2257/406; B01D 2257/80;
B01D 2258/0283

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: SDS Separation Technology B.V.
**3334 KG Zwijndrecht (NL)**

(72) Inventors:
• **Saris, Cornelis Martinus Petrus Maria**
  **3334 KG Zwijndrecht (NL)**
• **Geerts, Petrus Hendrikus Aloysius Catharina**
  **3334 KG Zwijndrecht (NL)**

(74) Representative: **De Vries & Metman**
**Overschiestraat 180**
**1062 XK Amsterdam (NL)**

(54) **STRIPPER OR DESORBER AND SYSTEM COMPRISING THE SAME**

(57)    The present disclosure relates to a stripper, separator or desorber device (100). The device comprises a housing (16), an inlet (6) into the housing (16) connected to a supply of target component rich solvent or absorbent (21), and internal configuration in the housing (16) configured to separate the target component from the rich solvent or absorbent (22), a target component outlet (2; 25) to discharge form the housing (16) target component separated from the rich solvent or absorbent; and a solvent or absorbent outlet (7) to discharge from the housing (16) lean solvent or absorbent (21) remaining after separation of the target component from the rich solvent or absorbent (22). Furthermore, the internal configuration in the housing (16) comprises a rotatable rotor (17) having a plurality of essentially axially extending channels (1) therein. Moreover, the present disclosure relates to a system comprising the stripper or desorber device (100), as well as an absorber device (200).

FIG. 1B

EP 4 667 083 A1

## Description

### FIELD

The present disclosure relates to a stripper or adsorber device and a cleaning system comprising said stripper or desorber device. The stripper or desorber device is in the art sometimes also referred to as a separator.

### BACKGROUND

In many industrial applications components are selectively scrubbed or absorbed out of gases (for 1. operational, 2. product purity and/or 3. environmental/emission based reasons) by liquid solvents which have 'exceptional' selective absorption capabilities for this specific target component. I.e. removing water out of natural gas by using a glycol solution, removing ammonia out of a nitrogen gas by water or acid, removing $CO_2$ out of flue gas by using amine solution or removing $SO_x$ by a lye solution such as sea water.

The target components partial pressure (i.e. $CO_2$, water or $SO_x$) in the solvent is determined by physical and chemical processes on molecular levels (thermo- and molecular dynamics) that go beyond this scope. Shortly put: when the target component in a solvent supplies a low vapor pressure to the interface, this target component is more likely to remain in the solvent instead of evaporating into the gas phase. A low vapor pressure means the target component is more at ease in the solvent then when it would have a high vapor pressure. Temperature reduction, pressure increase and increasing specific solvent component concentration (solvent composition) increase the target component amount that can be held in the liquid solvent. The molecular migration of the target component between the liquid and the gas phase is by diffusion. Henry's law or the Henry coefficient is a major parameter in this diffusion process. In case the specific component migrates from the gas into the liquid phase it is called absorption and from the liquid into the gas phase it is called desorption. Henry's law indicates in gas/liquid equilibria (thermodynamics) which way the diffusion travels. Henry's law describes the target components vapor pressure over the liquid interface, the difference in partial pressure at the interface and the gas bulk determines the direction of travel.
In absorption also called scrubbing one purposely decreases the target components concentration in the liquid solvent as much as other constraints allow.

Getting the target component in the liquid solvent is absorption. Getting the target component out of the liquid solvent is desorption or also called stripping.

In stripping the reverse of scrubbing/absorption is aimed for; namely getting the target component selectively out of the liquid solvent with the purpose to regenerate the solvent after which it can be reused for another round of absorption. As solvent components degrade faster with increased temperature; there is an upper temperature limit allowing stripping/desorption economically to take place. This however on its turn limits the target gas concentration reduction in the lean solvent. Liquid solvents are typically expensive so the process designer and operator aim for minimizing the amount of solvent consumed. This requires optimizing the trade-offs between the absorption and desorption processes.

In stripping or desorption, the target components partial pressure is increased on purpose by heating the liquid solvent causing the target component selectively to evaporate from the solvent.

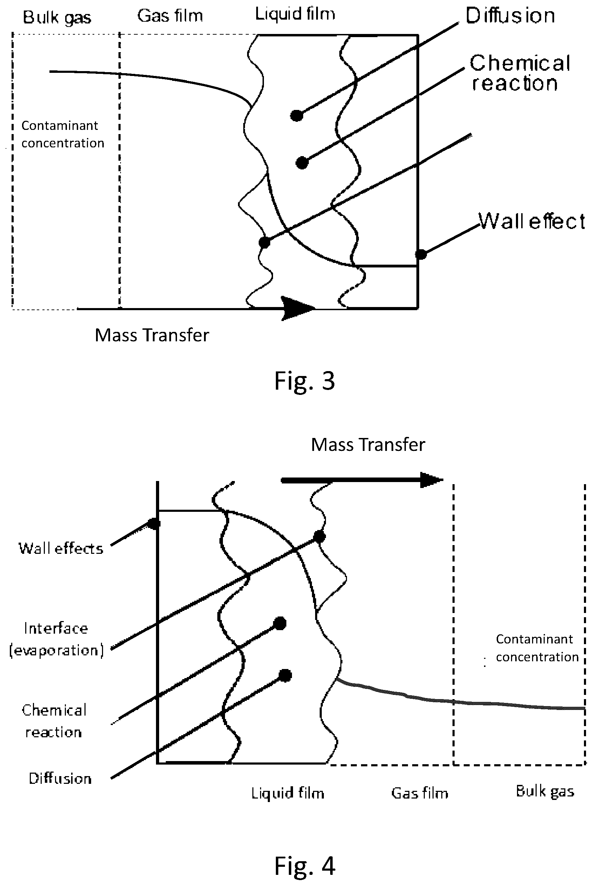

Below, some basic mechanisms of absorption or solving and adsorbing gaseous or particulate target component (contaminant) at a fluid surface are discussed, with reference to figures 3 and 4.

At an absorption interface in FIG.3, target component migrates from gas, for example flue gas, into the solvent or absorbent liquid.

The interface between the target component in the gas and liquid solvent or absorbent is exemplified in FIG. 3.

The target component in the bulk gas stream passing through an absorber is transported by diffusion into the gas film through a boundary layer and diffuses immediately into the liquid interface or is solved therein. The target component diffuses through this thin gas film across the interface into the liquid (droplet) film herewith condensing and emitting heat. Finally, the target component, which is also referred to herein as pollutant or contaminant, diffuses into the liquid bulk. Depending on the target component/solvent or absorbent combination in this liquid bulk, the target component may react chemically with the solvent, thereby reducing the partial pressure of the target component continuing the diffusion for as long as the solvent or absorbent is able to chemically react with and absorb the target component. This process is well documented in the skilled person's knowledge, for example standard work by J.H. Van 't Hoff and/or in the work by Kohl & Nielsen.

In FIG. 4 a schematic of the mechanism for desorption is exemplified. At a desorption interface, target component migrates from the liquid into the gas phase.

If besides physical absorption also a chemical reaction is involved in the absorber device, described above in relation to FIG. 3, in the desorber device the target component may first require to break the chemical bond with the solvent for which it requires sufficient heat. While the bulk liquid stream is passing through the desorber, the chemically released target component is transported by diffusion into the liquid film (boundary layer) immediately into the interface, and through into the gas stream. The target component diffuses through the thin liquid film across and subsequently evaporates in the gas (droplet) film. The evaporation enthalpy is supplied by the heat content in the liquid film. Finally, the target component (contaminant, pollutant) then diffuses into the gas bulk.

However, to the best knowledge of the creators of the present disclosure, separator, stripper or desorber devices currently - at the time of filing the present disclosure - all rely on voluminous trickle-down configurations aimed at cascading target component rich solvent or absorbent downward over plateaued heights to furnish, over the cascading height, sufficient mass transfer surface to extract the target component from the rich solvent or absorbent. This is however, extremely space and energy consuming, while extraction efficiency leaves a lot to be desired.

## SUMMARY

The present disclosure has for an objective to provide an improved stripper, separator or desorber device, which is achieved in that it comprises: a housing; an inlet into the housing connected to a supply of target component rich solvent or absorbent; internal configuration in the housing configured to separate the target component from the rich solvent or absorbent; a target component outlet to discharge form the housing target component separated from the rich solvent or absorbent; and a solvent or absorbent outlet to discharge from the housing lean solvent or absorbent remaining after separation of the target component from the rich solvent or absorbent. More in detail, according to the present disclosure, the internal configuration in the housing comprises a rotatable rotor having a plurality of essentially axially extending channels therein.

More in detail, the separator or desorber device may exhibit the feature that the rotor is arranged between the inlet and the lean solvent or absorbent outlet.

Additionally or alternatively, the stripper or desorber device may exhibit the feature that the rotatable rotor is connected to a drive. In such an embodiment, wherein the drive may be configured to drive the rotor to rotate at a rotational speed, at which centrifugal force forms an obstruction free film of rich solvent or absorbent on a radially outward oriented internal wall of the channels.

Additionally or alternatively, the stripper or desorber device may exhibit the feature that the target component outlet is arranged opposite to the lean solvent or absorbent outlet, relative to the rotatable rotor.

Additionally or alternatively, the stripper or desorber device may exhibit the feature of a vaporized lean solvent or absorbent inlet and a solvent or absorbent outlet. In such an embodiment, the stripper or desorber device also having a drive, may exhibit the feature that the vaporized lean solvent or absorbent inlet and a solvent or absorbent outlet are tangentially oriented to form or contribute to the drive.

In an embodiment exhibiting an vaporized lean solvent or absorbent inlet and a solvent or absorbent outlet, this the vaporized lean solvent or absorbent inlet may be at least connectable to a supply of vaporized lean solvent or absorbent. In such an embodiment, the supply of vaporized lean solvent or absorbent may derive at least a portion of lean solvent or absorbent from the solvent or absorbent outlet of the housing. Additionally or alternatively, the supply may comprise a heater for heating the lean solvent or absorbent to generate the vaporized lean solvent or absorbent.

Additionally or alternatively, the supply of target component rich solvent or absorbent may be at least connectable to an absorber.

The present disclosure also relates to a system comprising the above stripper or desorber device and an absorber connected to the inlet of the stripper or desorber device.

In more detail, the system may further comprise a supply of vaporized lean solvent or absorbent connected to the housing of the stripper or desorber device. Then, the supply may comprise a heater for heating the lean solvent or absorber to generate the vaporized lean solvent or absorber. Additionally or alternatively, the supply of vaporized lean solvent or absorbent may derive at least a portion of lean solvent or absorbent from the solvent or absorbent outlet of the housing.

Based on the above indications of aspects of the present disclosure in terms and expressions of the appended claims, herein below are provided more practical features of the present disclosure for enhanced understand of the present disclosure, which don't limit the scope of protection afforded to the present disclosure according to the appended claims.

## BRIEF DESCRIPTION OF THE DRAWING

In the appended drawing, embodiments of a desorber or stripper device potentially as a part of a system, all according to the present disclosure are shown in non-limiting embodiments, wherein the same or similar elements, components and functional aspects may be designated throughout the drawing with the same or similar reference signs and wherein:

FIG. 1A is a schematic top view of a rotating desorber device according to an embodiment of the present invention;
FIG. 1B is a schematic cross-sectional side view of a cross-section along a plane A-A of the embodiment shown in figure 1A;

FIG. 2 exhibits the desorber in FIG. 1A and 1B in a system with an absorber that is also according to the present disclosure;

Fig. 3 exemplifies basics of the mechanism for absorbing or solving target component from a gaseous stream into a liquid stream;

FIG. 4 exemplifies basics of mechanisms of mass transfer the other way around, relative to FIG. 3; and

FIG. 5 exemplifies a system including a desorber or stripper device, based on CO2 scrubbing and regeneration, using methanol.

## DETAILED DISCLOSURE OF EMBODIMENTS

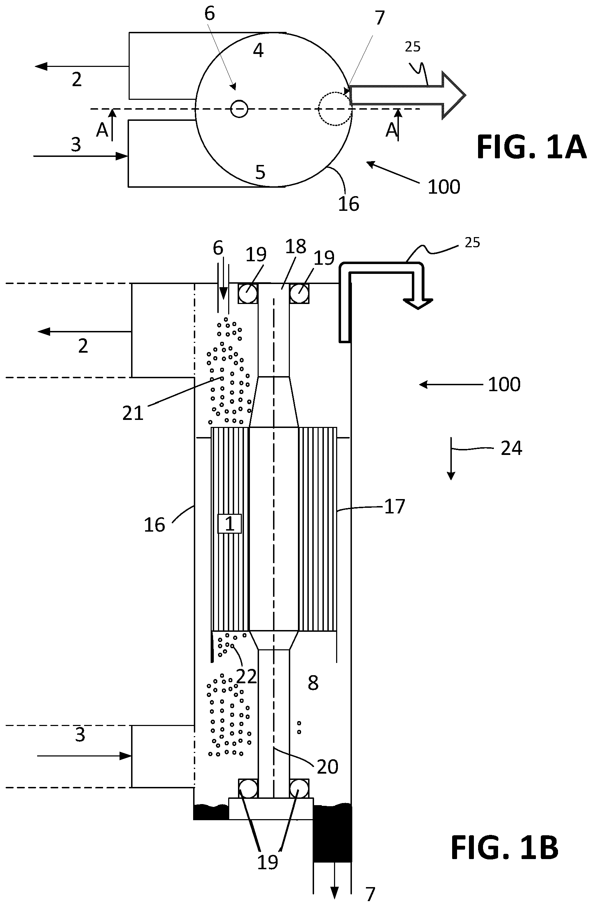

Referring to figures 1A and 1B, a rotating stripper device 100 in an embodiment of the present disclosure is shown. For many embodiments, reference to a 'stripper' device may technically be the most accurate description, although reference to a desorber and / or a separator is in any case also relevant. The stripper device 100 comprises a cylindrical housing 16 in which a rotor 17 is mounted on a shaft 18 supported by bearings 19. The rotor 17 comprises a number of axially extending stripping / desorbing channels 1, arranged parallel to a rotation axis 20, on which rotation axis 20 the shaft 18 is also aligned. The channels 1 are dimensioned such that a potentially laminar or turbulent flow may be achieved inside the channels 1. More in detail, outward forces induced by rotation of the rotor 17 push target rich fluid 21, that flows in or through channels 1, outward while preventing channels 1 becoming clogged with said target rich fluid. A rotational speed of the rotor 17 mat be set to a value that achieves these objectives by any properly skilled person, keeping in mind the volume of inbound fluid 21 per time unit, fluid characteristics of the target rich fluid such as viscosity and target content thereof, and also dimensions of the channels 1, both in cross section and length as well as roughness of the internal surfaces of the channels 1, as well as other factors, and the like. Thereby, a combined large release surface of target rich fluid in the channels 1 in combination is created, to promote the release of the target from the fluid to a much higher or better and efficient extent than in previous or prior art configurations of strippers.

For rotation thereof, the rotor 17 is arranged on and fixed to the shaft 18 which is rotatably mounted in the bearings 19.

In an embodiment in which the rotor 17 is driven by using a gas flow from inlet 3 to outlet 2, leakage between rotor 17 and housing 16 may be prevented by a suitable sealing arrangement. The gas flow from the inlet 3 towards the outlet 2 may be deployed solely to drive the rotor 17, or the gas or vapour in the flow may (also) contribute to the stripping process in the rotor 17. In the first case, in which the flow from the inlet 3 to the outlet 2 is solely used to drive the rotor 17, another flow or input of gas or vapour may be required to realize the stripping process.

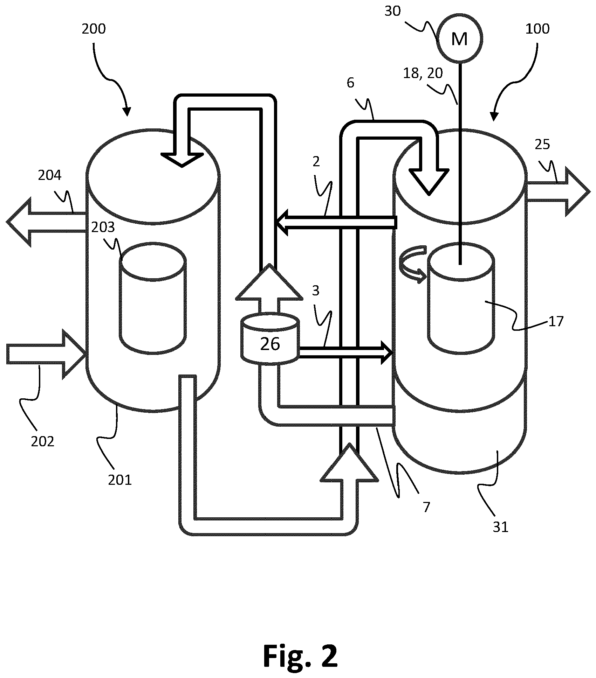

Namely, in the present embodiment of FIG. 1, the housing 16 is provided with a vapour/gas inlet 3 and a gas outlet 2 at least for driving rotation of the rotor 17. The gas inlet 3 consists of a duct that is tangentially positioned at a lower position 5 on or in the cylindrical housing 16 at an upstream end thereof to induce a swirling rotational motion of the incoming gas in the housing 16. The swirling motion of gas / vapour moving from the inlet 3 to the outlet 2 in a swirling fashion may suffice to induce a rotation of the rotor 17 within the housing 16 without external driving means such as a rotational motor. However, the rotor 17 may alternatively or additionally be externally driven, if desired, for instance by a motor 30, as in the embodiment of a system including a stripper 100 of FIG. 2. In embodiments wherein the gas or vapour in the flow from inlet 3 towards the oulet 2 is used in the stripping process, appropriate measures may need to be provided to minimize or prevent leakage between rotor 17 and inner wall of housing 16 for subjecting as much as possible of input target rich fluid 21 to a release mechanism for freeing target from the fluid 21 as possible. Likewise, any such bypass flow along rotor 17 may need to be minimized also for solely driving the rotor 17.

In the embodiment of FIG. 1, a configuration of the gas outlet 2 mirrors a configuration of the gas inlet 3 and comprises a duct that is tangentially positioned at higher position 4 on or in the cylindrical housing 16 at a downstream end thereof to direct the outcoming gas from a swirling rotational motion into a translating motion while leaving the housing 16 at the higher position 4. The expressions of downstream and upstream are related to the direction of transport of gas from the inlet 3 at the lower position 5 on or in the housing 16 to the outlet 2 at the higher position 4 on or in the housing 16, irrespective of other and/or additional inputs and discharges. The outlet 2 may be oriented in a return direction relative to the orientation of the inlet 3, but may additionally or alternatively extend in the same direction as the inlet 3, but at the higher (downstream) position 4, for example in the representation of FIG. 1A below the cross sectional plane A-A.

In addition to or as an alternative for the tangential inlet 3 and outlet 2, rotational gas motion can also be generated and nullified by stationary curved blades (not shown) provided at an upstream end and/or a downstream end of the rotor 17. The inner part of the static blade construction may contain the bearings 19 of the rotor 17. Locations of the inlet 3 at the lower position 5 and the outlet 2 at the higher position 4 may be reversed, i.e. the inlet 3 at the higher position 4 and the outlet 2 at the lower position 5. Likewise, discharge 25 and outlet 2 may be combined for outflow of target component, or embodied separately. The outlet 2, when outlet 2 is separate from the discharge 25 for outlow of separated target component, may form a feedback into an output of reboiler vessel 26 (as shown in FIG. 2) or into an infeed thereof for re-boiling, before being led back to the absorber device 200.

The configuration of the stripper 100 may comprise an optional evaporator 31 near the lower position 5, as in the embodiment of FIG. 2 and other embodiments that may be discussed herein below. Heaters and/or coolers may also be provided in or at ducts extending into and/or out of the housing 16 of the stripper 100, as will be indicated below in conjunction with other embodiments for other targets and / or based on other physical and / or chemical processes, and or a possible embodiment of recycling fluids.

In the embodiments of FIG. 1 and 2, in the stripper 100, at the top of the housing 16 at the downstream end or higher position 4 thereof, an inlet 6 for target rich absorbent liquid 21 is provided. The target (component) may here be $CO_2$, but other target components may also be the objective of additional and/or alternative embodiments, e.g. as included herein below, which may be absorbed in liquid 21 or be included therein in any other way, based on any physical or chemical process or phenomenon, that is reversible in stripper 100 or any similar separator to set the target, such as $CO_2$, free from the fluid 21. The solvent or absorbent may for example be glycol, amine, or any other suitable material.

In the embodiment shown in FIG. 1 and 2, the target rich liquid 21 is dropped or sprayed from the inlet 6 on the rotor 17 according to the arrow extending through or along the inlet 6. The inlet 6 may comprise a suitable spraying arrangement, such as a nozzle, or simply an open end of inlet 6. The liquid 21 is sprayed on the rotor 17, while gas flowing from inlet 3 to outlet 2 or motor 30 induces rotation of the rotor 17 on the shaft 18 around the axis 20, to provide for a preferably even distribution of liquid 21 over the channels 1 extending axially through the rotor 17. The target rich fluid 21 enters into the channels 1 and is rotated against the outside of inner walls of channels 1, as it moves down through the channels with gravity in the direction of arow 24 in FIG. 1. As noted above, several parameters are to be taken into account to determine a rotational speed of the rotor 17 and prevent the channels from being clogged with the fluid 21 to provide a hugely increased exchange surface within the channels 1 for release of the target from the fluid, relative to any prior art trickle-down configuration.

At a side of the rotor 17 that is opposite the inlet 6, fluid 22 from which target component is removed relative to the input fluid 21 at the inlet 6 is expelled from the rotor 17 into collection chamber 8. The target component that is removed from the fluid 21 to provide clean or lean fluid 22 below the rotor 17, may rise in the rotor 17 and through the housing 16 to be expelled through outlet 2 or through discharge 25, depending on the embodiment. In specific embodiments of a stripper 100, depending on the type of the stripper 100 and on the nature of the target component to be removed from the target rich fluid 21, the separated target component may fall through the rotor 17 with the down flowing fluid 22, in which case the outlet 2 or discharge 25 may need to be provided at a lower end of the housing 16.

The clean or lean fluid 22 below the rotor 17 exits the rotor 17 to break up and be propelled in the form of droplets into a liquid collection chamber 8 and can form a liquid pool on the bottom of housing 16. The fluid 22 is removed from the housing 16 via outlet 7. Then, the clean or lean fluid 22 may be recycled, of which some aspects will be discussed in some detail herein below.

As an alternative to the vertical arrangement shown in figures 1A and 1B, the rotational stripper or desorber device 100 according to an embodiment may be positioned horizontally. The flow of liquid 21 inside the channels 1 of the rotor 17 is controlled by centrifugal forces and shear forces exerted by the gas flowing inside the channels 1 of the rotor 17. Channels 1 through rotor 17 may be embodied is a spiraling, screw thread fashion, to advance the fluid through the channels 1 when rotating the rotor 17. When leaving the channels 1 of the rotor 17, the motion of the lean or clean (absorbate-containing) liquid 22 and liquid droplets is governed by centrifugal forces.

An alternative or even external drive, engine or motor 30 may be used when there is a need to rotate the rotor 17 independently of the gas flow from the inlet 3 to the outlet 2. The supply of said gas flow via inlet 3 may then serve not for the purpose of rotational impulse to make the rotor 17 rotate, but only for release of the target component from the rich fluid 21 for which a vapour or gas flow may still need to be introduced. Such a motor 30 for rotating the rotor 17 may in such an embodiment be connected to the rotor 17 through a magnetic coupling for instance. No shaft piercing through the housing 16 is needed in such embodiment, thus keeping the advantage of preventing the use of complicated sealing arrangements to prevent escape of gasses.

On the stripping process, the following is noted:

In the stripping process conducted in the stripper device 100, the target rich liquid 21 may comprise solvent (enriched) with a target component, where the target (e.g. $CO_2$) may be absorbed or solved in the solvent 22 (e.g. amine), that comes into contact on the striper's internal surface structure of the channels 1 in the rotor 17 (also referred to herein as the 'internal channels of the rotor 17 of the stripper or desorber device 100') with (lean/unsaturated) vapor moving from the inlet 3 to the outlet 2 to selectively desorb the target component from the rich solvent 21 into the lean (solvent) vapor. In such an embodiment, the inlet 3 in FIG. 1 supplies solvent / absorbent vapour for the stripping or desorbing process in the rotor 17, while it may provide a rotational impulse to the rotor 17. Herewith, the following is achieved:

1. Reducing the target component concentration in the rich solvent/absorbent fluid 21 and converting it into lean solvent 22.
2. Increasing the target component concentration in the vapor supplied via the inlet 3 and removed via outlet 2.
3. Rich solvent / absorbent 21 becomes lean solvent / absorbent 22

# EP 4 667 083 A1

Evaporated lean solvent components condense and cool down in the stripper's or desorber's internals (e.g. channels 1 in rotor 17) and supply locally the required enthalpy for evaporation and endothermic chemical de-bonding for migrating the target component from the liquid phase into the gas phase, to be discharged from the rotor 17 in the vapour. In general, most solvents/absorbents degenerate with increasing temperature.

On the interfaces and boundaries of and in the stripper or desorber device 100, the following is noted, with reference to FIG. 2 depicting a system according to the present disclosure, comprising an absorber 200 in addition to the stripper or desorber device 100 of FIG. 1. In FIG. 2, an absorber device 200 is provided, which may be configured in accordance with prior art and may comprise a rotor 203 having axial through channels (not shown) in the interior of a vessel 201. The absorber device 200 may have a flue inlet 202 for supply of a target rich inbound flue gas, comprises a concentration of target component, such as for example $CO_2$. An internal configuration, such as the afore mentioned rotor 203, functions to absorb in absorbent or solve in solvent the target component, such as $CO_2$, and thereby remove the target component from the supplied flue gas. The cleansed flue gas may be expelled from the vessel 201 via cleansed flue outlet 204.

The target rich solvent or absorbent is fed or supplied to the stripper or desorber device 100 via ducts leading from the vessel 201 to the inlet 6 of the stripper or desorber device 100. Conversely, optionally after appropriate processing, clean or lean absorbent or solvent fluid 22 from outlet 7 of stripper or desorber device 100 may be supplied to the vessel 201 of the absorber device 200 in the system depicted in FIG. 2. Then:

1. Target component rich solvent or absorbent fluid 21 is supplied through inlet 6 into stripper or desorber device 100, optionally using a pump, from the absorber liquid outlet of the absorber device 200 to the liquid inlet 6 of the stripper or desorber device 100;

2. Lean/unsaturated solvent vapor is supplied via inlet 3 by a reboiler 26. A heat source such as steam, fire, heat pump condenser or electric resistance supplies heat to the reboiler required for the evaporation of lean absorbent or solvent and the chemical debonding of the target component from the solvent. Instead of heating the lean or clean solvent, alternatively an inert or hydrocarbon gas can be used, provided that it has a low target component partial vapor pressure as a carrier for desorbing the target component from the target component rich absorbent or solvent fluid 22.

3. A part of the lean or clean absorbent or solvent fluid may flow from the stripper or desorber device 100 to the reboiler vessel 26, where it is conditioned at the required stripping temperature and pressure and from where it is fed to the absorber device 200 and back to the stripper or desorber device 100 through inlet 3.

4. Concentrated target gas + vapor is emitted via a outlet 21 or discharge 25 from the stripper or desorber device 100 to conventional post-processing and/or vapor and mist recovery units to further purify the target component or/and recover absorbent or solvent components.

5. Pressure, temperature and solvent composition determine the 'desorption/desaturation' limits.

On the internal interfaces and boundaries of the stripper or desorber device, the following is noted:

1. Rich solvent flows from inlet 6 downward through the stripper or desorber device 100 and through the channels 1 in rotating rotor 17 to form liquid films within the channels 1 in the rotor 17 to have these films contact the gas flow for target component mass transfer. Previously, trickle-down structures were used for mass transfer in internal structures of conventional stripper or desorber devices - also called the 'internal' structure of the stripper or desorber - to increase a heat and mass transfer area between gas and liquid. According to the present disclosure, rotor 17 with channels 1 is used to perform this function.

Namely, typically so called 'packed bed' internal structures were used to provide this gas-liquid contact interface for stripping or desorbing. These conventional packed bed structures varied in a provided so called specific area (m2/m3) and shape, thereby causing different flow patterns in the stripping device, usually embodied as a column, to take place (see fundamental description below). In the stripper or desorber device 100, including the rotor 17 with the internal axial channels 1, the flow patterns are well defined and short (much shorter than in prior art packed-bed configurations), resulting in reduced solvent or absorbent fluid consumption, in the order of at least 300 less fluid consumption, as well as considerably reduced energy consumption in the order of a reduction of at least 300.

In this desorber or stripper device 100, which may also have a shorter (lower) housing 16 in the form of a column with an internal stripping or desorbing mechanism, a rotating rotor 17 is applied that is mounted on a shaft 18 and contains axially extending channels 1 with a diameter that can vary from 0.1 mm to 5mm. On the surface of the channels a liquid film is formed by the rich solvent or absorbent flowing down in the channels 1.

2. Vapor flows (with low target component vapor pressure) upward through the internal channels 1 in the rotor 17.

3. Vapor condenses liquid in the channels 1 and simultaneously desorbs the target component as vapor condensation enthalpy and target component enthalpy are in thermal equilibrium.

4. Target component molar flow evaporating out of the rich solvent 21 is equal to the molar flow into the vapor from inlet 3. This complies with the diffusion laws and mass conservation. The underlying mass and heat transport in this stripping process is fully determined by the diffusion process through the interface layers between the gas and liquid film that is formed on the wall of the rotating channels 1 as described above.

5. At the top of the channels 1, near the inlet 6, the solvent or absorbent is rich in target component, and the vapor saturated with target component, if the channel 1 are sufficiently long for thermal and mass diffusion to occur.

6. At the bottom of the channels 1 extending through the rotor 17, the absorbent or solvent is lean and clean and the vapor has the lean solvent vapor target component concentration, if the channel is sufficiently long for thermal and mass diffusion to occur.

7. The stripper's or desorber's internal rotation of the rotor 17 containing the channels 1 generates centrifugal forces yielding rich solvent distribution both over the rotating internal rotor 17 and over the wall of the axial channels 1. This causes stabilization of the liquid film flow in the channels 1 and moreover the channels 1 generate sufficient pressure drop for a controlled vapor distribution over the rotating internal axial channels 1 as well. Rotating too fast reduces the diffusion surface and consequently also the diffusion rate, while rotating too slow may have as a result that the film may clog (some of) the channels 1, as a result of capillary effects.

The configuration of the stripper or desorber device 100 exhibits numerous fundamental advantages:

1. Internals with small channels (0.1-5.0mm) have increased specific surface area (2-10x) compared to conventional stripping internals, such as conventional trickle-down structures, thereby reducing a total required height of the stripper or desorber device 100 of this disclosure relative to conventional stripper or desorber devices.

2. The small channels (0.1-5.0mm) reduce the characteristic diffusion length (hydraulic diameter) compared to conventional packings (10mm typical), thereby increasing the concentration gradient and diffusion flux, thereby reducing a total stripper or desorber height. As shown by Fick's law:

$$j\left[\frac{1}{m^2 s}\right] = D\left[\frac{m^2}{s}\right] \cdot \frac{\left(C_l^* - C_g\right)\left[\frac{1}{m^3}\right]}{\Delta x\,[m]} = \frac{D_l}{\Delta x_l}\left(C_l - C_{l_i}\right) = \frac{D_g}{\Delta x_g}\left(C_{g_i} - C_g\right)$$

$$C_{g_i} = H \cdot C_{l_i}$$

$$J\left[\frac{1}{s}\right] = j\left[\frac{1}{m^2 s}\right] \cdot A[m^2] = k\left[\frac{m}{s}\right] \cdot A[m^2](C_l - C_G)\left[\frac{1}{m^3}\right]$$

Wherein:

j is the diffusion flux or with other words the molecular flux of the target component from the liquid into the gas phase.

J is the diffusion or mass transfer rate

D is the diffusion coefficient, $D_l$ for liquid, $D_g$ for gas.

Cl* is the corrected liquid concentration, $C_l^* = C_l \cdot H$ ; Cl is the liquid concentration, H is the target component's Henry constant. It is noted here, that the liquid concentration needs to be corrected by the target component's Henry constant as this is the lever between gas/liquid concentration diffusion equilibria.

Cg is the gas (bulk) concentration

Cgi is the gas interface concentration

Cl*-Cg is the concentration difference; number per unit volume. $\Delta x$ is the characteristic diffusion length (channel hydraulic diameter).

$\frac{C_l^* - C_g}{\Delta x}$ is the concentration gradient.

Cl is the liquid bulk concentration, Cli is the liquid interface concentration.

k is the mass transfer coefficient

A is the mass transfer area

Assuming all others are constant; a smaller characteristic diffusion length yields a lower volume device 100 for the same J or a higher J at the same volume than in prior art. The mass transfer coefficient is greater and the same mass transfer area is achieved in a much smaller volume. The same may hold true for heat transfer which is based on the same diffusion process. The rotating channels 1 extending through the rotor 17 of the desorber or stripper (separator) device 100 therefore provide a very effective mass and heat transfer for stripping compared to commonly used trickle-down or packed-bed equipment, especially when phase changes such as condensation and evaporation are considered.

Mass/Heattransfer resistances from gas to liquid bulk

| Bulk gas | Gas film | Interface | Liquid film | Liquid bulk |
|---|---|---|---|---|
| Rgb | Rgf | Ri | Rlf | Rlb |

$$q = k \cdot \frac{\Delta T}{\Delta x} \rightarrow decreasing\ \Delta x\ and\ increasing\ k\ improves\ q$$

3. A more stable thin film liquid flow inside the channels 1 is due to centrifugal rotation of the rotor 17:

    a. Small channels (smaller than 5-7mm) may become clogged by capillary effects when relying purely on gravity in trickle-down structures to generate a thin film.
    b. Rotation (by means of centrifugal acceleration) overcomes surface tension in small channels (0.1-5.0mm) enabling a stabilized thin film with increased effective mass and heat transfer area.
    c. The channel walls keep radial and circumferential flows in check; the flow direction is mainly axial and therefore more efficient.

4. For given process conditions at a similar stripper or desorber device 100 internal diameter: the described rotating small channel separator internal yields cleaner / leaner solvents or absorbents (closer to the thermodynamic equilibrium) than conventional stripping columns while maintaining a diminutive posture (low height: 3-5x overall separator height reduction)

5. Leaner / cleaner solvents increase absorption diffusion rates enabling savings for the process designer and operator in the absorber size, solvent flow rates and/or energy consumption.

6. The channels generate sufficient pressure drop for a controlled vapor distribution ensuring a more equal gas velocity distribution from the internals inner and outer radius allowing for reduced excess solvent dosing compared to conventional technology. Effectively enabling operation closer to the theoretical minimum required liquid solvent amount

Stripper device's internal fundamentals:
Generally mass transfer in the internal channels 1 or the rotor 17 is used to increase the available mass transfer area in as little volume possible (yielding a high ratio value of mass transfer area to device volume $\left[\frac{m^2}{m^3}\right]$ ) and thereby the hydraulic diameter or characteristic diffusion length is reduced. This improves both the mass transfer coefficient and mass transfer area and thus the mass transfer rate compared to prior art plain tube or trickle-down structures.

Conventional internal configurations of stripper or desorber devices 100 utilize static packed beds or rings with characteristic diffusion length scales of 10mm and $200-300\left[\frac{m^2}{m^3}\right]$ mass transfer surface area. This is where the diffusion takes places.

Capillary effects occur below 10mm (2-7mm) length scales clogging up internals and slowing diffusion. To use smaller characteristic lengths, centrifugal forces are deployed with advantage, since gravity is quite constant on Earth.

The small channels (0.1-5mm, typically 1mm) of the sttrippe rsupply correspondingly smaller characteristic diffusion length scales and yield higher mass transfer surface area. For instance, 1 mm channels result in 2800 m$^2$/m$^3$. This implies the mass transfer surface area is half a magnitude larger than the contemporary (prior art) internals. Furthermore compared to conventional internals diffusion length scales are a magnitude lower and diffusion transfer rates a magnitude higher.

These internal advantages yield a much shorter mass and heat transfer length resulting in columns of similar diameter but greatly reduced height and improved desorption results.

According to the present disclosure, the absorption process in the absorber device 200 also benefits from the configuration of the stripper or desorber device 100:

In the absorption process, the (flue) gas that is rich with a target component (here: $CO_2$) and enters the absorber device 200 at inlet 202, comes into contact in the absorber's internals (that may be similar or identical to rotor 17 of the stripper or desorber device 100) with lean liquid solvent to selectively absorb the target component from the flue gas into the absorbent / solvent. Thereby:

1. the target component concentration in the lean solvent is increased and it may be converted into rich absorbent or solvent. (close to saturation)
2. The condensation and bonding enthalpy are exothermic: the solvent warms up as it progressively gets richer with target component, which may necessitate pre-cooling of the gas and lean solvent to deal with this exothermic reaction.
3. the target component concentration in the gas is decreased, and
4. Lean solvent becomes target component rich solvent.

The vapor condenses in the internals of the absorber device 200 which may require (pre-) cooling to prevent excessively high temperatures.

Absorber interfaces and boundaries:

1. Lean solvent is supplied (optionally: using a pump) from a fresh solvent or absorbent supply or from the reboiler vessel 26 and the stripper or desorber device 100 to the liquid inlet of the absorber device 200;
2. Gas with a high target component concentration, such a flue gas, is supplied by an external source to the absorber gas inlet 202.
3. Rich solvent is transported, optionally using a pump, from the absorber device 200 to the stripper or desorber device 100;
4. Gas with reduced target component is emitted by the absorber device 200 via outlet 204 to post-processing and/or vapor and mist recovery units to further purify the gas or/and recover solvent components.

Absorber/Desorber interaction

1. To increase absorption (rates) the stripper or desorber device 100, it's necessary to provide the leanest solvent or absorbent possible.
The leanest solvent allows for the absorber vessel 201 to become as small as possible, as well as a strongly reduced energy consumption and solvent or absorbent flow rate. These are all design trade-offs.
An improved stripper or desorber device 100 typically results in an improved absorber device 200.
2. The absorber device 200 is normally larger and more expensive than the stripper or desorber device 100. The stripper or desorber device 100 ideally only processes the absorbed or solved target component which (if designed correctly) is a fraction of the total gas flow in the absorber device 200. However, due to diffusion (and Henry's law) also other components absorb into the solvent or absorbent to be promoted towards or into the stripper or desorber device 100.
3. The stripper or desorber device 100 needs to be provided by the absorber device with the richest (in terms of target component concentration) possible solvent or absorbent.
The richest solvent or absorbent allows the smallest energy consumption and solvent flow.
The stripper or desorber device 100 and reboiler vessel 26 duty are mainly based on;

    a. Heat of evaporation and de-bonding enthalpy of target component

        i. This scales directly with amount of target component solved or absorbed and stripped or desorbed.

    b. Solvent or absorbent thermal losses due to imperfect heat exchange and non-adiabatic process

        i. These scale with solvent flow rates.

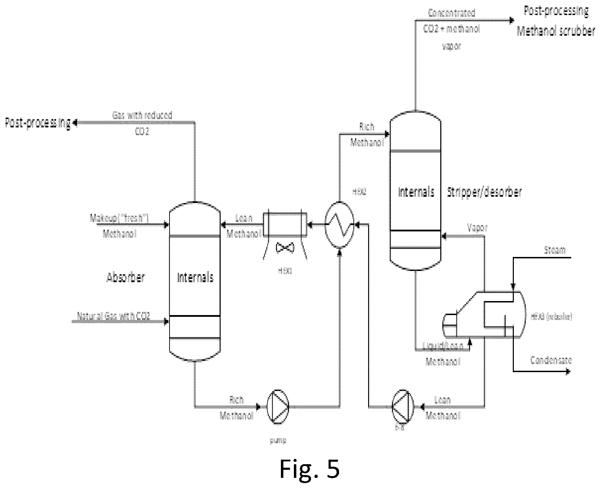

Herein below, with reference to FIG. 5 an embodiment of a stripper or desorber device 100 is shown and described, based on an embodiment of $CO_2$ scrubbing and regeneration, using methanol, to remove $CO_2$ from natural gas, which is one possible implementation of the present disclosure. Basics of the mechanisms involved in the system are known to the skilled person, for example from the work of Kohl & Nielsen. FIG. 5 shows a simplified schematic.

The internals of the stripper or desorber device 100 in the system of FIG. 5 are the same as or essentially / functionally similar to those of the stripper or desorber device 100 with the rotor 17 disclosed herein with reference to FIG. 1A and FIG.1B.

The methanol stripping process for $CO_2$ stripping or desorption in the stripper or desorber device 100 in FIG. 5 entails the following steps:

In the stripping process the rich methanol (enriched) with $CO_2$ comes into contact in the internals, e.g. rotor 17, of the stripper or desorber device 100 with (lean/unsaturated) absorbent vapor to selectively desorb the $CO_2$ into the vapor. The 'internals' refer to a rotor the same as or similar to the rotor 17 in the embodiment of FIG. 1B. Herewith, the following is achieved

1. Reducing the $CO_2$ concentration in the $CO_2$ target component rich methanol and converting it into lean methanol.
2. Increasing the $CO_2$ in the vapor.
3. Rich methanol becomes lean methanol.

It is noted here that as an alternative, $N_2$ gas can be used to desorb $CO_2$ out of rich methanol instead of heating.

The absorbent vapor condenses in the internals of the stripper or desorber device 100, formed preferably by a rotor like the rotor 17 in FIG. 1B, and supplies the required $CO_2$ enthalpy of evaporation. There's no need for debonding, as this is purely a case of physical desorption without chemical binding.

At the interfaces and boundaries of the stripper or desorber device 100:

1. Rich methanol absorbent is supplied e.g. by a pump from the absorber liquid outlet to the stripper liquid inlet ('rich methanol').
2. Lean/unsaturated methanol absorbent vapor is supplied by a reboiler HEX3 (steam boiler usually) filled with lean methanol. An external heat source such as steam, fire, heat pump condenser or electric resistance supplies heat to the reboiler HEX3.
3. Lean methanol flows from the stripper or desorber device to the reboiler vessel HEX3.
4. concentrated $CO_2$ gas + methanol vapor is emitted by the stripper or desorber device to conventional post-processing and/or vapor and mist recovery units to further purify the $CO_2$ or/and recover methanol.
5. Pressure, temperature and solvent composition determine the 'desorption/desaturation' limits.

At the internal interfaces and boundaries of the stripper or desorber device 100:

1. rich methanol flows downward through the rotating internal channels 1 of the rotor 17 (with a size of 0.1mm to 5mm) forming a thin film (0.01-0.5mm) in these channels 1.
2. Absorbent (methanol) vapor flows upward through the rotating internal channels 1.
3. Absorbent vapor condenses liquid in the internal channels 1 and desorbs target component, in particular $CO_2$.
4. Absorbent vapor condensation enthalpy and $CO_2$ enthalpy are in thermal equilibrium.
5. $CO_2$ molar flow evaporating out of the rich absorbent is equal to the $CO_2$ molar flow into the vapor. This complies with physical diffusion laws and mass conservation.
6. at the top of channels 1, the methanol is rich and the vapor saturated with $CO_2$ as the target component, if the channel is sufficiently long for thermal and mass diffusion to occur.
7. at the bottom of the channels 1, the methanol is lean and the vapor has the lean absorbent vapor target component ($CO_2$) concentration, if the channel is sufficiently dimensioned, in particular: being sufficiently long, for thermal and mass diffusion to occur.
8. In the stripper or desorber device 100, the internal rotation of the rotor 17 generates centrifugal forces yielding rich methanol distribution, liquid film stabilization and the channels 1 consequently generate sufficient pressure drop for a controlled solvent vapor distribution to be ensured. Rotating too fast reduces the diffusion rate, rotating too slow means the film may clog at least some of the channels 1 because of capillary effects.

In the absorber device 200 of the system in FIG. 5, the $CO_2$ absorption process by methanol (Rectisol) is performed. This absorption process is in principle well known to the skilled person.

In the absorption process the (flue) gas with a concentration of $CO_2$ therein comes into contact in the absorber's internals formed by channels 1 with lean liquid methanol to selectively absorb the target component in the methanol, to thereby extract the CO2 from the flow of flue gas. Herewith, the following is achieved:

1. Increasing the $CO_2$ concentration in the lean methanol and converting it into rich methanol. (close to saturation)

2. The $CO_2$ condensation enthalpy warms up the rich solvent. The absorbent warms up, as it gets richer in $CO_2$ content, as a result of which pre-cooling of the gas and lean absorbent may be required to deal with this exothermic process.

3. Decreasing the target component ($CO_2$) concentration in the gas.

4. Lean solvent becomes rich solvent.

At the absorber interfaces and boundaries:

1. Lean methanol is supplied by a pump from the reboiler and/or from the stripper or desorber device 100 directly to the absorber liquid inlet.

2. Gas, e.g. natural gas, with a high $CO_2$ concentration is supplied by an external source to the gas inlet of the absorber device 200.

3. Rich methanol is transported, e.g. pumped, from the absorber device 200 to the stripper or desorber device 100.

4. Natural Gas with a reduced $CO_2$ concentration is emitted by the absorber device 200 to essentially conventional post-processing and/or vapor and mist recovery units to further purify the gas or/and recover absorbent components.

As for the interaction between the absorber device 200 and the stripper or desorber device 100, the following is noted:

1. To increase absorption (rates) achieved by the absorber device 200, the stripper or desorber device 100 needs to provide the leanest methanol possible, i.e. with as low a content of $CO_2$ as possible.

The leanest methanol allows the smallest vessel 201 of or in the absorber device 200, as well as a strongly reduced energy consumption and / or reduced methanol flow rate. These are all design trade-offs.

An improved stripper or desorber device 100 typically means an improved functionality and configuration of the absorber device 200.

2. The absorber device 200 is normally larger and more expensive than the stripper or desorber device 100. The stripper or desorber device 100 ideally only processes the absorbed $CO_2$, which (if designed correctly) is a fraction of the total gas flow in the absorber device 200. However, due to diffusion and Henry's law, also other components absorb into the solvent towards the stripper or desorber device 100.

3. The stripper or desorber device 100 needs to be provided by the absorber device 200 with the richest possible methanol, i.e. having a high content of $CO_2$.

The richest methanol allows the smallest energy consumption and methanol flow.

The stripper or desorber device and HEX3 reboiler duty are mainly based on:

a. Heat of evaporation and potentially also de-bonding enthalpy of target component(although in this case debonding may be considered inconsequential)

i. This scales directly with amount of $CO_2$ absorbed and stripped.

b. Solvent thermal losses due to imperfect heat exchange and non-adiabatic processes

i. These scale with solvent flow rates

It is noted that in essence, a system for dehydration of natural gas using glycol as an absorbent may exhibit the same working principles as those in the embodiment of FIG.5 for extraction of $CO_2$ from natural gas, by respectively replacing methanol with glycol and $CO_2$ with $H_2O$. The process of the absorber device 200 is then based on TEGlycol.

Likewise, in essence, a system for CO2 extraction from natural gas using amine as a solvent may exhibit the same working principles as those in the embodiment of FIG.5 for extraction of CO2 from natural gas, by replacing absorbent methanol with solvent amine.

In the stripping process in the stripping or desorbing device 100, the rich liquid amine (enriched) with CO2 comes into contact in the internals of the stripper or desorber device 100, e.g. rotor 17, with (lean/unsaturated) solvent vapor to selectively strip or desorb $CO_2$ in the lean solvent/amine vapor. Herewith

1. Reducing the $CO_2$ in the rich amine solvent and converting it into lean amine.

2. Increasing the CO2 in the vapor.

3. Rich amine becomes lean amine.

Here, it's not a practical option to use N2 gas as an alternative for heating.

The lean amine solvent vapor condenses in the internals of the stripper or desorber device 100, formed preferably by a rotor like the rotor 17 in FIG. 1B, and supplies the required target component's enthalpy of evaporation and endothermic de-bonding, for $CO_2$ as the target component.

At the interfaces and boundaries of the stripper or desorber device 100:

1. Rich amine solvent is supplied by e.g. a pump from the absorber liquid outlet to the liquid inlet,
2. Lean/unsaturated amine solvent vapor is supplied by a reboiler HEX3 (steam boiler usually) filled with lean amine solvent. An external heat source such as steam, fire, heat pump condenser or electric resistance supplies heat to the reboiler HEX 3.
3. Lean amine solvent flows from the stripper or desorber device 100 to the reboiler vessel HEX3.
4. concentrated $CO_2$ + amine solvent vapor is emitted by the stripper or desorber device 100 to conventional post-processing and/or vapor and mist recovery units to further purify the $CO_2$ target component or/and recover amine solvent components.
5. Pressure, temperature and solvent composition determine the 'desorption/desaturation' limits.

In the stripper or desorber, on internal interfaces and boundaries, the following is noted:

1. rich amine solvent flows downward through the rotating internal channels 1 of the rotor 17 (with a size of 0.1mm to 5mm) forming a thin film (0.01-0.5mm) in these channels 1.
2. Lean amine solvent vapor flows upward through the rotating internal channels 1 in a counter flow relative to the rich solvent flow.
3. Lean amine solvent vapor condenses liquid in the internal channels 1, and desorbs target component, in particular $CO_2$.
4. Lean amine solvent vapor condensation enthalpy and target component ($CO_2$) enthalpy are in thermal equilibrium.
5. $CO_2$ molar flow evaporating out of the rich amine solvent is equal to the molar flow into the lean solvent vapor. This complies with physical diffusion laws and mass conservation.
6. at the top of channels 1, the amine solvent is rich and the vapor saturated with $CO_2$ as the target component, if the channels 1 are sufficiently dimensioned, in particular: being sufficiently long, for thermal and mass diffusion to occur.
7. at the bottom of the channels 1, the amine solvent is lean and the vapor has the lean solvent vapor target component concentration, if the channels 1 are sufficiently dimensioned, in particular: being sufficiently long, for thermal and mass diffusion to occur.
8. The stripper or desorber exhibits internal rotation of the rotor 17 to generate centrifugal forces yielding rich amine solvent distribution, liquid film stabilization and the channels 1 consequently generate sufficient pressure drop for a controlled vapor distribution to be ensured. Rotating too fast reduces the diffusion rate, rotating too slow means the film may clog at least some of the channels 1 because of capillary effects.

In the absorber device 200 of the system in FIG. 5, the $CO_2$/amine absorption process is performed.

In the absorption (solving / binding) process, the (flue) gas with a concentration of $CO_2$ therein comes into contact in the absorber's internals e.g. formed by channels 1 through a rotor with lean liquid amine solvent to selectively absorb or bind the target component in the solvent, to thereby extract the $CO_2$ from the flow of flue gas. Herewith, the following is achieved:

1. Increasing the $CO_2$ concentration in the lean amine solvent and converting it into rich amine solvent. (close to saturation)
2. The enthalpy of bonding and condensation are exothermic: the solvent warms up, as it gets richer in $CO_2$ content, as a result of which pre-cooling of the gas and lean solvent may be required to deal with this exothermic reaction.
3. Decreasing the target $CO_2$ concentration in the gas.
4. Lean solvent becomes rich solvent.

The vapor condenses in the internal mechanism of the stripper or desorber device 100 (channels 1 in rotor 17) and supplies the required target component's enthalpy of evaporation and endothermic de-bonding.

At the interfaces and boundaries of the absorber device 200:

1. Lean solvent is supplied e.g. by a pump from the reboiler and/or from the stripper or desorber device directly to the absorber liquid inlet.
2. Gas, e.g. natural gas, with a high CO2 concentration is supplied by an external source to the gas inlet of the absorber device 200.

3. Rich amine solvent is transported, e.g. pumped, from the absorber device 200 to the stripper or desorber device 100.

4. Natural gas with reduced $CO_2$ content or concentration is emitted by the absorber to essentially conventional post-processing and/or vapor and mist recovery units to further purify the gas or/and recover amine solvent components.

As for the interaction between the absorber device and the stripper or desorber device, the following is noted:

1. To increase absorption (rates) achieved by the absorber device, the stripper or desorber device needs to provide the leanest amine solvent possible, i.e. with as low a content of CO2 as possible.

The leanest amine solvent allows for a smallest possible vessel 201 of the absorber device 200, as well as a strongly reduced energy consumption and/or reduced amine solvent flow rate. These are all design trade-offs.

An improved stripper or desorber device 100 typically means an improved functionality and configuration of the absorber device 200.

2. The absorber device 200 is normally larger and more expensive than the stripper or desorber device 100. The stripper or desorber device 100 ideally only processes the absorbed (bound, solved) $CO_2$, which (if designed correctly) is a fraction of the total gas flow in the absorber device. However, due to diffusion and Henry's law, also other components absorb into the solvent towards the stripper or desorber device.

3. The stripper or desorber device needs to receive from the absorber device the richest possible amine solvent, i.e. having a high content of CO2.

The richest amine solvent allows the smallest energy consumption and solvent flow.

The stripper or desorber device and HEX3 reboiler duty are mainly based on;

a. Heat of evaporation and de-bonding enthalpy of CO2

i. This scales directly with amount of CO2 absorbed and stripped.

b. Amine solvent thermal losses due to imperfect heat exchange and non-adiabatic processes

i. These scale with amine solvent flow rates

Various embodiments of the present disclosure may be implemented within the bounds of the teachings of the present disclosure, without venturing outside of the scope of protection for the present disclosure as defined in the appended claims, and in particular the independent claims. No part or portion of the embodiments in the drawing or according to the above description thereof may be unduly isolated as a limiting aspect on this scope of protection according to the claims.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present disclosure has been presented for purposes of illustration, but is not intended to be exhaustive or limited to the implementations in the form disclosed.

Thus it may be evident that many modifications and variations relative to the above embodiments will be apparent to those of ordinary skill in the art, without departing from the scope of protection for of the present disclosure. The embodiments were chosen and described in order to best explain the principles and some practical applications of embodiments according to the present disclosure, and to enable others of ordinary skill in the art to understand the present disclosure and the breadth of the scope of protection for various embodiments with various modifications as are suited to the particular use contemplated.

**Claims**

1.  A stripper or desorber device (100), comprising:

    - a housing (16);

- an inlet (6) into the housing (16) connected to a supply of target component rich solvent or absorbent (21);
- internal configuration in the housing (16) configured to separate the target component from the rich solvent or absorbent (22);
- a target component outlet (2; 25) to discharge form the housing (16) target component separated from the rich solvent or absorbent; and
- a solvent or absorbent outlet (7) to discharge from the housing (16) lean solvent or absorbent (21) remaining after separation of the target component from the rich solvent or absorbent (22),

wherein the internal configuration in the housing (16) comprises a rotatable rotor (17) having a plurality of essentially axially extending channels (1) therein.

2. The stripper or desorber device of claim 1, wherein the rotor (17) is arranged between the inlet (6) and the lean solvent or absorbent outlet (7).

3. The stripper or desorber device of claim 1 or 2, wherein the rotatable rotor (17) is connected to a drive (2, 3; 30).

4. The stripper or desorber device of claim 3, wherein the drive (2, 3; 30) is configured to drive the rotor (17) to rotate at a rotational speed, at which centrifugal force forms an obstruction free film of rich solvent or absorbent on a radially outward oriented internal wall of the channels (1).

5. The stripper or desorber device of any of the preceding claims, wherein the target component outlet (2; 25) is arranged opposite the lean solvent or absorbent outlet (7) relative to the rotatable rotor (17).

6. The stripper or desorber device of any of the preceding claims, further comprising a gaseous or vaporized lean solvent or absorbent inlet (3) and a target riched vapour outlet.

7. The stripper or desorber device of claim 6, wherein the gaseous or vaporized lean solvent or absorbent inlet (3) is arranged opposite the inlet (6), relative to the rotatable rotor (17).

8. The stripper or desorber device of claim 3 and any of claims 6 and 7, wherein the vaporized lean solvent or absorbent inlet (3) and a target enriched vapour outlet (2) are tangentially oriented to form or contribute to the drive.

9. The stripper or desorber device of claim 6 or 7 or 8, wherein the vaporized lean solvent or absorbent inlet is at least connectable to a supply of vaporized lean solvent or absorbent.

10. The stripper or desorber device of claim 9, wherein the supply of vaporized lean solvent or absorbent derives at least a portion of lean solvent or absorbent from the solvent or absorbent outlet (7) of the housing (16).

11. The stripper separator or desorber device of claim 9 or 10, wherein the supply comprises a heater for heating the lean solvent or absorber to generate the vaporized lean solvent or absorber.

12. The stripper or desorber device of any of the preceding claims, wherein the supply (6) of target component rich solvent or absorbent (22) is at least connectable to an absorber (200).

13. A system comprising the stripper or desorber device (100) according to any one of the preceding claims, and an absorber (200) connected to the inlet (6) of the stripper or desorber device (100).

14. The system of claim 13, further comprising a supply of vaporized lean solvent or absorbent connected to the housing (16) of the stripper or desorber device (100).

15. The system of claim 14, wherein the supply comprises a heater for heating the lean solvent or absorber to generate the vaporized lean solvent or absorber.

16. The system of claim 14 or 15, wherein the supply of vaporized lean solvent or absorbent derives at least a portion of lean solvent or absorbent from the solvent or absorbent outlet (7) of the housing (16).

FIG. 1A

FIG. 1B

**Fig. 2**

Fig. 3

Fig. 4

Fig. 5

Europäisches
Patentamt
European
Patent Office
Office européen
des brevets

# EUROPEAN SEARCH REPORT

**Application Number**

EP 24 18 3662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 662 759 A (KEITH BREWER AUBREY) 15 December 1953 (1953-12-15) * column 1, line 1 - column 1, line 10; figures 1,4,5 * | 1-16 | INV. B01D53/14 B01D3/00 B01D53/18 |
| X | FR 2 361 138 A1 (SHAFRANOVSKY ALEXANDR [SU]) 10 March 1978 (1978-03-10) * page 1, line 1 - page 1, line 5; figures 1-9 * | 1-10, 12-14,16 | |
| Y | | 11,15 | |
| Y | WO 2018/212643 A1 (ROMICO HOLD A V V [NL]) 22 November 2018 (2018-11-22) * figures 1,2,4 * | 1-16 | |
| Y | CN 101 549 274 A (UNIV BEIJING CHEMICAL [CN]) 7 October 2009 (2009-10-07) * figures 1,5-9 * | 1-16 | |
| Y | US 2019/388836 A1 (BUMB PRATEEK [GB] ET AL) 26 December 2019 (2019-12-26) * figures 3A,3B * | 1-16 | TECHNICAL FIELDS SEARCHED (IPC) B01D F17C |

The present search report has been drawn up for all claims

| Place of search | Date of completion of the search | Examiner |
|---|---|---|
| Munich | 15 November 2024 | de Biasio, Arnaldo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 3662

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | | Publication date | Patent family member(s) | | Publication date |
|---|---|---|---|---|---|
| US 2662759 | A | 15-12-1953 | NONE | | |
| FR 2361138 | A1 | 10-03-1978 | NONE | | |
| WO 2018212643 | A1 | 22-11-2018 | AU | 2018271034 A1 | 16-01-2020 |
| | | | BR | 112019024101 A2 | 02-06-2020 |
| | | | CA | 3063676 A1 | 22-11-2018 |
| | | | CN | 110891669 A | 17-03-2020 |
| | | | CY | 1124214 T1 | 27-05-2022 |
| | | | DK | 3624923 T3 | 14-06-2021 |
| | | | EA | 201992711 A1 | 16-04-2020 |
| | | | EP | 3624923 A1 | 25-03-2020 |
| | | | HR | P20210884 T1 | 23-07-2021 |
| | | | JP | 7127119 B2 | 29-08-2022 |
| | | | JP | 2020523196 A | 06-08-2020 |
| | | | KR | 20200012898 A | 05-02-2020 |
| | | | PH | 12019502550 A1 | 25-01-2021 |
| | | | PL | 3624923 T3 | 18-10-2021 |
| | | | PT | 3624923 T | 25-06-2021 |
| | | | US | 2020070089 A1 | 05-03-2020 |
| | | | WO | 2018212643 A1 | 22-11-2018 |
| CN 101549274 | A | 07-10-2009 | NONE | | |
| US 2019388836 | A1 | 26-12-2019 | AU | 2019295363 A1 | 17-12-2020 |
| | | | BR | 112020026582 A2 | 23-03-2021 |
| | | | CA | 3098141 A1 | 02-01-2020 |
| | | | CN | 112351829 A | 09-02-2021 |
| | | | CN | 116550101 A | 08-08-2023 |
| | | | EP | 3813982 A1 | 05-05-2021 |
| | | | EP | 3888771 A1 | 06-10-2021 |
| | | | JP | 7461896 B2 | 04-04-2024 |
| | | | JP | 2021529083 A | 28-10-2021 |
| | | | JP | 2024036338 A | 15-03-2024 |
| | | | KR | 20210023969 A | 04-03-2021 |
| | | | SG | 11202011220P A | 30-12-2020 |
| | | | US | 2019388836 A1 | 26-12-2019 |
| | | | US | 2021322923 A1 | 21-10-2021 |
| | | | US | 2023330596 A1 | 19-10-2023 |
| | | | WO | 2020002891 A1 | 02-01-2020 |

EPO FORM P0459

For more details about this annex : see Official Journal of the European Patent Office, No. 12/82